# EUROPEAN PATENT APPLICATION

(11) **EP 1 083 682 A2**
(43) Date of publication of application: **14.03.2001**
(21) Application number: 00118185.8
(22) Date of filing: 30.08.2000
(51) Int. Cl.: H04B 7/185

(54) **Built-in self test (BIST) approach for regenerative data transmission system**

(30) Priority: 10.09.1999 US 394146
(71) Applicant: TRW Inc., Redondo Beach, California 90278 (US)
(72) Inventor: Moretti, Vincent C., Torrance, CA 90501 (US)
(74) Representative: Schmidt, Steffen J., Dipl.-Ing.

(57) **Abstract**

A Built-In Self Test (BIST) system 100 is provided for testing data transmission health at the payload level of a satellite communication system 400 and within a communications satellite 130 of the system 400. The BIST system 100 includes a demodulator 136 having a BIST pattern generator injecting a BIST pattern into the data stream of a communications satellite 130. A BIST comparator downstream in the data stream compares the BIST pattern it receives with a predetermined, known BIST pattern. The BIST comparator may be located within an on-board computer 142, a processing module 165 within a routing processor 140, or a demodulator 122 within a receive ground terminal 120, for example. Additionally, the BIST pattern may be passed from an input crossbar switch 138, an output crossbar switch 180, a data

switch 160 within a routing processor 140, or a processing module 165 within a routing processor 140 to the on-board computer 142 for the BIST comparison. Additionally, the BIST pattern may be crosslinked between satellites in the satellite communication system 400 or may be looped back from the output crossbar switch 144 to the input crossbar switch 138 of the satellite 130. The BIST pattern may be supplied to the BIST generator by a data generator circuit such as a ROM, a memory within the on-board computer 142, or a ground command circuit.

## Description

### BACKGROUND OF THE INVENTION

The present invention generally relates to a Built-In Self Test (BIST) for satellite communications. More particularly, the present invention relates to a BIST with multiple testing points in the data communications stream.

In satellite communications applications, on-board built-in testability of communications payloads has become an increasingly important concern as systems increase in complexity, scope and cost. For example, in a regenerative data routing satellite payload not only data integrity but routing accuracy and Quality of Service (QoS) must be maintained.

However, at the present time, self-testing is restricted to the component or module level. That is, individual components or modules of the satellite communications system may be tested and verified, but data integrity throughout the data path (through several modules) may not be maintained. Self-testing at the component or module level provides only a limited view of overall payload health because the health of the payload is only tested within the component or module. For example, modules such as a switch or a component within a switch may be self-tested, but such a self test verifies only the functionality of the switch module or component, not the integrity or "health" of the data passing through the switch. Thus, self-testing over larger portions of the data stream (payload-level), instead of at the component or module level, may be more reliable in assessing data health.

Also, a payload test originating from a single ground station and directed to a satellite may be insufficient to test a multi-beam, multi-satellite system because only the beam containing the ground station is tested. Additionally, the payload test from the ground station may be subject to transmission and RF equipment interference making it difficult to ascertain payload health. Also present testing systems may interfere with or degrade the communications service of the satellite. Additionally, component or module testing may be unable to localize an error or interruption so that appropriate correction may be implemented.

Testing at the payload-level, rather than at the component or module level, may minimize one or more of these difficulties. Testing the overall data communications stream from front to end may allow detection of errors that escape notice in module or component-level testing. Additionally, testing the data stream in several points in the stream may provide localization of communication errors and a reliable picture of payload health. Additionally, a payload-level BIST encapsulated as a data block in the communications stream may act as an accurate test of payload health without interfering with standard service.

Thus, a need has long existed for a payload-level BIST that provides testing over extended portions of the data communications stream while providing multiple testing points in the data stream to verify payload health.

### SUMMARY OF THE INVENTION

The present invention provides a payload-level Built-In Self Test (BIST) approach for regenerative data transmission systems. The BIST system interjects a BIST pattern into the regenerative data transmission system at a desired point along a data stream. The BIST system then extracts the pattern from the regenerative data transmission system at a desired downstream point along the data stream. The points of interjection and extraction of the BIST pattern are spaced apart, whereby the BIST pattern travels along the data stream through multiple electronic components or modules. A BIST system may provide for testing data transmission health at the payload level of a communications satellite. By way of example, the BIST system may include a demodulator having a BIST pattern generator for injecting a BIST pattern into the data stream of a communications satellite. The BIST system may include a BIST comparator located in the data stream downstream of the demodulator to compare the BIST pattern received with a predetermined, known BIST pattern. The BIST comparator may be located at various points along the data stream, for example within an on-board computer, a processing module within a routing processor, or a demodulator within a ground terminal that receives a data stream from a communications satellite. Additionally, the BIST pattern may be passed through a data stream including components or modules such as an input crossbar switch, an output crossbar switch, a data switch within a routing processor. A computer on-board satellite may perform the comparison of the received BIST pattern with a predetermined known BIST pattern. The BIST pattern may be supplied to the BIST pattern generator by a data generator circuit such as a ROM, a memory within the on-board computer, or a ground-based circuit.

These and other features of the present invention are discussed or apparent in the following detailed description of the preferred embodiments of the invention.

### BRIEF DESCRIPTION OF THE DRAWINGS

Figure 1 illustrates a communications system 100 incorporating a Built-In Self Test (BIST) subsystem according to a preferred embodiment of the present invention.
Figure 2 shows an exemplary framing diagram including a BIST pattern generated by the BIST subsystem of Fig. 1, according to a preferred embodiment of the present invention.
Figure 3 illustrates an exemplary flowchart for a processing sequence carried out according to the preferred embodiment of the present invention.

### DETAILED DESCRIPTION OF THE PREFERRED EMBODIMENTS

Figure 4 illustrates a satellite communications system 400 according to a preferred embodiment of the present invention. The satellite communication system 400 includes a transmit ground terminal 410, a receive ground terminal 420, a first satellite 430, a second satellite 440 and an n^{th} satellite 450. The satellite communication system 400 also includes an uplink 460, a first downlink 470, a crosslink 475, a second downlink 480, and an n^{th} downlink 490.

The transmit ground terminal 410 includes a transmit antenna 416. The receive ground terminal 420 includes a receive antenna 426. The first satellite 430 includes at least one uplink antenna 432, at least one downlink antenna 434, at least one receive crosslink antenna 438, and at least one transmit crosslink antenna 436. The second satellite 440 includes at least one uplink antenna 442, at least one downlink antenna 444, at least one receive crosslink antenna 448, and at least one transmit crosslink antenna 446. The n^{th} satellite 450 includes at least one uplink antenna 452, at least one downlink antenna 454, at least one transmit crosslink antenna 456, and at least one receive crosslink antenna 458.

In operation, a signal is transmitted from the transmit antenna 416 of the transmit ground terminal 410 to the uplink antenna 431 of the first satellite 430 via the uplink 460. The first satellite 430 receives and processes the signal. The first satellite 430 may transmit the received signal to either the receive ground terminal 420 or the second satellite 440. If the received signal is transmitted to the receive ground terminal 420, the signal passes to the downlink antenna 434 of the first satellite 430 to the receive antenna 426 of the receive ground terminal 420 via the first downlink 470. If the received signal is transmitted to the second satellite 440, the signal passes from the transmit crosslink antenna 436 of the first satellite 430 to the receive crosslink antenna 448 of the second satellite 440 via the crosslink 475.

Once the signal has been received by the second satellite 440, the second satellite 440 may also transmit the received signal to either the receive ground terminal 420 or the n^{th} satellite 450. Similar to the first satellite 430, if the received signal is transmitted to the receive ground terminal 420, the signal passes from the downlink antenna 444 of the second satellite 440 to the receive antenna 426 of the receive ground terminal 420 via the second downlink 480. If the received signal is transmitted to the n^{th} satellite 450, the signal passes from the transmit crosslink antenna 446 of the second satellite 440 to the receive crosslink antenna 458 of the n^{th} satellite 450.

Once the signal has been received by the n^{th} satellite 450, the n^{th} satellite 450 transmits the received signal to the receive ground terminal 420. The signal passes from the downlink antenna 454 of the n^{th} satellite 450 to the receive antenna 426 of the receive ground terminal 420 via the n^{th} downlink 490.

Each of the satellites in the satellite communications system 400 is generally similar. The satellites may be arranged in a number of patterns, including a pattern that may allow a signal to be transmitted from a starting satellite to each satellite in the pattern through crosslinks, and then back to the starting satellite. The operation of the satellites in the satellite communications system 400 is further described below.

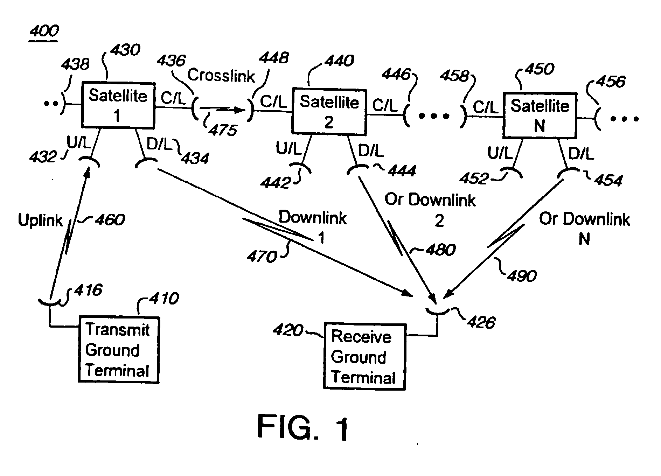

Figure 1 illustrates a communications system 100 having a payload-level Built-In Self Test (BIST) subsystem according to a preferred embodiment of the present invention. The communications system 100 includes a transmit ground terminal 110, a satellite 130 and a receive ground terminal 120. The transmit ground terminal 110 includes a modulator 112, an RF converter 114 and a transmit antenna 116. The receive ground terminal 120 includes a demodulator 122 an RF converter 124 and a receive antenna 126.

The satellite 130 includes a plurality of uplink modules (uplinks) 131, at least one receive crosslink module (receive crosslink) 185, an input crossbar switch 138, a routing processor 140, an on-board computer 142, an output crossbar switch 144, at least one transmit crosslink module (transmit crosslink) 195, and a plurality of downlink modules (downlinks) 145.

Each uplink 131 includes an uplink antenna 132, an RF converter 134 and an uplink demodulator 136. Each uplink antenna 132 of each uplink 131 may process several uplink communication beam coverages. Additionally, each uplink 131 may include several RF converters 143 and demodulators 136. For example, where an uplink antenna 132 is processing several uplink communication beam coverages, each communication beam may be converted and demodulated by a separate RF converter/demodulator pair.

Each receive crosslink 185 includes a receive crosslink antenna 186, an RF converter 187, and a crosslink demodulator 188. Similar to an uplink 131, each receive crosslink antenna 186 may process several crosslink communication beams and may include several RF converter/demodulator pairs, for example, a RF converter/demodulator pair for each received crosslink communication beam.

Each downlink 145 includes a downlink modulator 146, an RF converter 148, and a downlink antenna 150. Similar to an uplink 131, each downlink antenna 150 may transmit several downlink communication beams and may include several modulator/RF converter pairs, for example, a modulator/RF converter pair for each transmitted downlink communication beam.

Each transmit crosslink 195 includes a transmit crosslink antenna 196, an RF converter 197, and a crosslink modulator 198. Similar to an uplink 131, each transmit crosslink antenna 196 may transmit several crosslink communication beams and may include several RF converter/demodulator pairs, for example, a RF converter/demodulator pair for each transmitted crosslink communication beam.

The routing processor 140 includes a plurality of input modules 155, a data switch 160, a processing module 165, and a plurality of output modules 170.

The uplinks 131 and the receive crosslink 185 are connected to the input crossbar switch 138 which switches the data received from the uplinks 131 and the receive crosslink 185 to the input modules 155. The input crossbar switch 138 is also connected to the on-board computer 142 via a bi-directional connection 175. The input modules 155 couple data to the data switch 160 which switches received data to the output modules 170. The data switch 160 is connected to the processing module 165. The data switch is also connected to the on-board computer 142 via a bi-directional connection 177. The processing module 165 is also connected to the on-board computer via a bi-directional connection 179. The output modules 170 are connected to the output crossbar switch 144 which switches the data received from the output modules 170 to the downlinks 145 and transmit crosslink 195. The output crossbar switch is also connected to the on-board computer 142 via a bi-directional connection 180.

In operation, a signal from the transmit ground terminal 110 is modulated at modulator 112, converted to RF at the RF converter 114 and then transmitted to the satellite 130 via the transmit antenna 116. The transmitted signal is received by the uplink antenna 132 of an uplink beam servicing the transmit ground terminal 110. The signal received by the uplink antenna 132 is then downconverted in frequency at the RF converter 134 to form an uplink analog waveform and demodulated at the demodulator 136. The demodulator 136 receives the uplink analog waveform and extracts a data stream. The data stream is then sent to the input crossbar switch 138 which directs the data stream to the appropriate input module 155 within the routing processor 140. Within the routing processor 140, the data stream is switched from input modules 155 to output modules 170 via the data switch 160. The routed data stream is then sent to the output crossbar switch 144 which switches the data stream to the appropriate downlink 145. Data routing and data processing performed by the routing processor 140 is controlled by the on-board computer 142. The on-board computer 142 may also control satellite command and telemetry.

The data stream received by the downlink 145 is modulated at the modulator 146, upconverted in frequency at the RF converter 148, and then transmitted via the downlink antenna 150. The data stream signal transmitted by the downlink antenna 150 is then received by the receive antenna 126 of the receive ground terminal 120. The received data stream signal is then RF converted at the RF converter 124 and demodulated at the demodulator 122.

Alternatively, the output crossbar switch 144 may route the data stream to the transmit crosslink 195. The data stream received by the transmit crosslink 195 is modulated at the crosslink modulator 198, upconverted in frequency at the RF converter 197 and then transmitted via the transmit crosslink antenna 196. The data stream signal transmitted by the transmit crosslink antenna 196 may then be received by the receive crosslink antenna of another satellite in the satellite communications system 400.

According to the preferred embodiment of the present invention, BIST generators are provided at the uplinks 131 of the satellite 130. By way of example only, within the demodulator 136 of each uplink 131 may include a BIST data source or BIST generator 137. The BIST generator 137 injects a known BIST pattern into the data stream at the input of the satellite communications payload. The BIST pattern may be created by or provided to the BIST generator 137 in several different ways. For example, the BIST pattern may be hard-coded in ROM or a data generator circuit. Alternatively, the BIST pattern may be stored in the on-board computer's 142 memory 133 and then transferred to the demodulator 136 during operation. Optionally, the BIST pattern may be sent to the satellite 130 via the transit ground terminal 110 and subsequently loaded into the BIST generator 137. Once the BIST pattern is added to the data stream, the satellite system carries the BIST pattern with the data stream through the components and modules of the satellite to the downlink 145 or transmit crosslink 195. The BIST pattern may also, if desired, be transmitted with the data stream to the receive ground terminal 120 or to another satellite in the satellite communications system 400.

In addition to the BIST generator 137 within the uplinks 131, the preferred embodiment of Fig. 1 also includes at least one BIST data comparator 123, 131, 166 located at one or more desired points in the switching of data cells. The BIST data comparators 166, 133 and 123 may be located at the processing module 165, in the on-board computer 142 and the demodulator 122 within the receive ground terminal 120, respectively, and the like as shown in Figure 1. The BIST data comparators 166, 131 and 123 detect the BIST in the data stream and determine the payload functionality and the data signal health. That is, the BIST comparators compare the BIST pattern they receive with a known, expected BIST pattern. If the received BIST pattern differs from the known, expected BIST pattern, an error has occurred in the data stream. The BIST capability is thus integrated into the payload design. The BIST pattern is inserted such that the BIST pattern is processed like actual data to the payload. Detecting the BIST data results at the BIST receivers allows for the payload level built-in self test.

In operation, the BIST pattern generated at the BIST generator 137 within the demodulator 136 of the uplink 131 passes to the input crossbar switch 138 along with the data stream. The on-board computer 130 may read the BIST pattern output from the input crossbar switch via connector 175. The on-board computer 130 directs the BIST pattern to a BIST comparator module 133 (such as the software routine or hardware performed by the on-board computer 130). The BIST comparator module 133 compares a received BIST pattern with a known BIST pattern. If the received and know BIST patterns differ, the BIST comparator module 133 identifies an error in the operation of the input crossbar switch 138. Hence, the received and known BIST patterns, when compared, are used to test the functionality of the demodulator 136 and input crossbar switch 138.

Alternatively, if the data path including the BIST pattern is from the receive crosslink 185, the data comparison may be used to verify the integrity of the data path from a transmitting satellite to the receive crosslink 185 and then to the input crossbar switch 138.

The input crossbar switch 138 also passes the BIST pattern along with the data stream, if present, to the associated input module 155 and then to the data switch 160. The on-board computer 130 may read the BIST pattern received by, or output from, the data switch 160. The BIST comparator module 131 compares the received BIST pattern to a known BIST pattern. If the BIST pattern received by the data switch 160 is incorrect, the BIST comparator module 131 identifies an error upstream from the data switch 160. Hence, the comparison may be used to test the input path from the uplinks 131 to the data switch 160.

Optionally, the BIST pattern may be read by the processing module 165, in which a BIST comparator module 166 compares received and known BIST patterns to test the data path at the processing module 165. The BIST pattern received by the processing module 165 may also be passed to the on-board computer 142 for comparison to test the data path through the processing module 165.

The data switch 160 passes the BIST pattern along with the data stream to the output crossbar switch 144 where the BIST pattern may then be sent to the on-board computer 130 via connection 180. The BIST comparator module 131 compares the known BIST pattern to the BIST pattern received by the output crossbar switch 144 or output from the output crossbar switch 144. This comparison may be used to verify the integrity of the data path from the uplinks 131 to the output crossbar switch 144. Throughout the routing of the BIST pattern, it may be treated like any other data block.

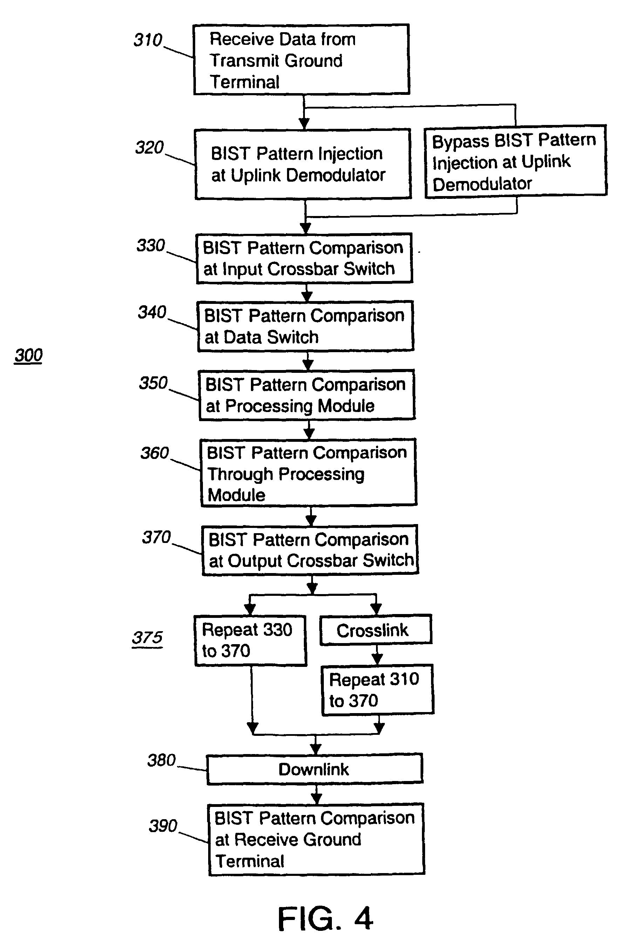

The output crossbar switch 144 passes the BIST pattern, if present, along with the data stream to the downlinks 145 and the transmit crosslink 195. The downlink 145 and the transmit crosslink 195 processes the BIST pattern along with the data stream. At the transmit crosslink 195, the BIST pattern may be modulated at the modulator 198, upconverted at the RF converter 197 and then transmitted via the transmit crosslink antenna 196 to another satellite in the satellite communications system 400 of Figure 4. Once the BIST pattern has been transmitted to another satellite, the BIST pattern may be further compared, for example at the input crossbar switch of the receiving satellite, to verify the integrity of the inter-satellite data path.

At the downlink 145, the BIST pattern may be modulated at the modulator 146, upconverted at the RF converter 148 and transmitted via the downlink antenna 150 to the receive ground terminal 120. When it is received by the receive ground terminal's 120 receive antenna 126, the BIST pattern is downconverted at the RF converter 124 and then demodulated at the demodulator 122. The demodulated BIST pattern is then compared to the known, expected BIST pattern. If the demodulated BIST pattern differs from the known, expected BIST pattern, then an error in the data stream has occurred. This comparison may be used to test the health of the data from the uplink 131 through the routing processor 140 and downlink 145 to the receive ground terminal 120.

Additionally, the output crossbar switch 144 may pass the BIST pattern to the input crossbar switch 138 via a loop connection 178. The BIST pattern may then be further compared at the input crossbar switch 138. The input crossbar switch 138 may also switch the BIST pattern to the input modules 155. Similar to the BIST pattern received from the uplinks 131, the BIST pattern may continue in the data path to further verify the integrity of the data path. The loop connector 178 allows complete verification of the routing processor 140, the input crossbar switch 138, and the output crossbar switch 144 from a single BIST source.

If the BIST pattern received at any BIST data comparison point (such as the on-board computer 142, processing module 165, or receive ground terminal 120) does not match the expected BIST pattern, then an error or interruption of the data path or the data switching may have occurred.

The present payload-level BIST enables testing of the data integrity over large portions of the data path. An embodiment of the present invention may be implemented by the inclusion of the BIST pattern generator in the uplink and then comparison of the BIST at any point or any number of points in the data path. For example, the BIST may be implemented with the only data comparison occurring at the receive ground terminal 120. Comparison at only the receive ground terminal 120 provides for the verification of the overall data path, but may not provide optimal insight into the location of an error or interruption in the data path that has caused a detected error. Additionally, the BIST may be implemented with the only data comparison occurring at the output crossbar switch 144. Comparison at only the output crossbar switch 144 may verify the data path from the uplink 131 to the output crossbar switch 144, but also does not provide localization of the error. Nor is verification of the downlink 145 possible with that option.

Additionally, implementation of the payload-level BIST in a multi-satellite system such as the satellite communications system 400 of Figure 4 allows extensive testing and verification of the inter-satellite data path. As described in Figure 4, a BIST signal may be generated at the first satellite 430 and then either passed to the downlink 434 or the transmit crosslink 436 of the first satellite 430. The BIST signal may be used inside the first satellite 430 to verify the integrity of the data path within the satellite. The BIST signal may also be transmitted via the downlink 434 to the receive ground terminal 420 to verify the integrity of the data path to the ground terminal. Additionally, the BIST signal may be sent from the transmit crosslink 436 of the first satellite 430 to the receive crosslink 448 of the second satellite 440 via crosslink 475 to determine the integrity of the data path over the crosslink and through the crosslink 185 of the second satellite 440. The BIST pattern may then be switched through the second satellite 440 to verify the internal data path of the second satellite 440. The BIST signal may then be either transmitted to the receive ground terminal 420 via the downlink 444 of the second satellite 440 or transmitted to other satellites in the satellite communications system 400 of Figure 4 to provide further data path verification.

Preferably, the payload-level BIST of the present invention is implemented as shown in Figure 1. The preferred embodiment provides for testing and verification of the data path at each step in the routing process. The data is tested 1) at the input crossbar switch 138, 2) at the data switch 160, 3) at the processing module 165, 4) through the processing module 165, 5) at the output crossbar switch 144, and 6) at the demodulator 122 within the receive ground terminal 120. Thus, each BIST comparison verifies an incrementally longer portion of the data path. This allows an error or interruption in the data path to be quickly detected so the back-up system may be brought on-line or the system may be reconfigured. Additionally, any error or interruption may be pin-pointed to a great degree thus allowing minimal interruption in service.

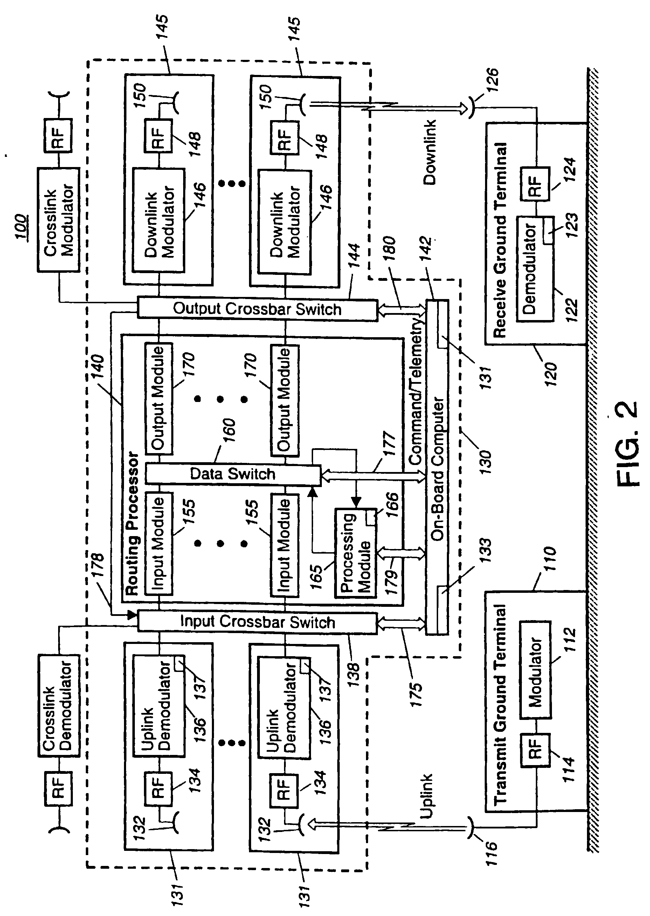

Figure 2 shows an exemplary framing diagram 200 for a data stream passed from the transmit ground terminal 110 to the satellite 130 to the receive ground terminal 120 or to another satellite in the satellite communications system 400 of Figure 4, and including an exemplary BIST pattern. As shown in the exemplary framing diagram 200, the data stream may include a masterframe 210 having a number of frames 220. Each frame 220 may be divided into a number of time probe slots 230 and data traffic slots 240. The data traffic slots 240 include the data from the transmit ground terminal 110 to be routed through the satellite 130 to a receive ground terminal 120. Optionally, the data may be encoded as either light coded blocks 250 or heavy coded blocks 260 as shown. By way of example only, for the BIST generator 137 inserts a BIST pattern 270 into an unused light coded block 250 as shown in Fig. 2. The BIST pattern 270 may be inserted once per frame 220 as shown or may be inserted at some other time interval such as once per masterframe 210. The reduction in data cell throughput due to the allocation of a block 250 to the BIST pattern 270 is minimal even if the BIST pattern is inserted in each frame 220 because of the large number of traffic slots 240 per frame 220.

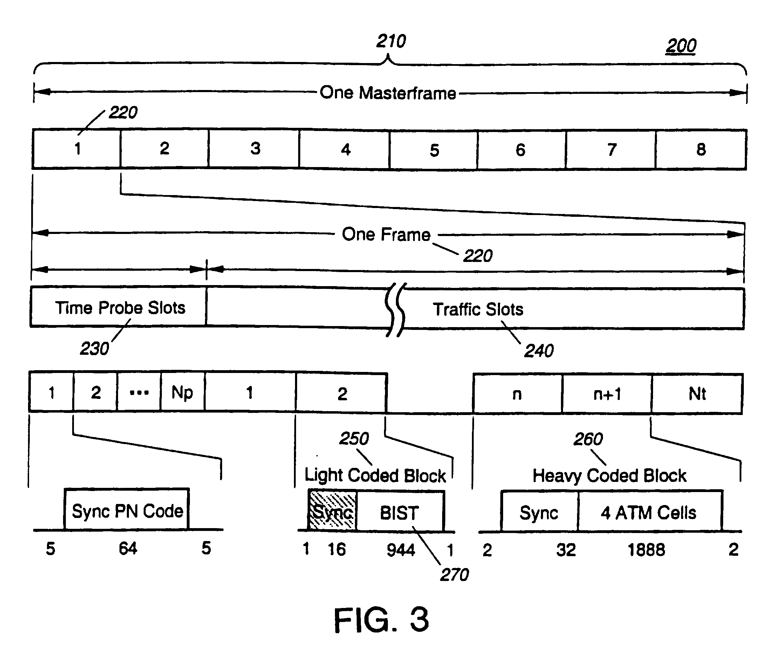

Figure 3 illustrates an exemplary flowchart 300 of the preferred embodiment of the present invention. First, at step 310, data from the transmit ground terminal 110 is received at the uplink 131. At step 320, the BIST generator 137 injects a BIST pattern into the data stream. The data stream is then passed to the input crossbar switch 138. At the input crossbar switch 138, the BIST pattern is passed to the on-board computer 142 via bi-directional connection 175 and a BIST comparison occurs (step 330). The data stream then passes through the input crossbar switch 138 and the input modules 155 to the data switch 160. At step 340, the BIST pattern is passed from the data switch 160 to the on-board computer 142 via bi-directional connection 177 and another BIST comparison occurs. The BIST pattern is then passed to the processing module 165 where another BIST comparison occurs (step 350). The BIST pattern is then passed through the processing module 165 to the on-board computer 142 via bi-directional link 179 where another BIST comparison occurs (step 360).

The BIST pattern passes from the data switch 160 through the output modules 170 to the output crossbar switch 144. At step 370, the BIST pattern is passed from the output crossbar switch 144 to the on-board computer 142 via bi-directional connection 180 and another BIST comparison occurs.

Next, at step 375, the BIST pattern may be looped back from the output crossbar switch 144 to the input crossbar switch 138 via the loop connection 178. If the BIST pattern is looped back, then the BIST pattern passes to the input crossbar switch 138 where another BIST comparison occurs at step 330. The BIST pattern then passes through the satellite as before through steps 340, 350, 360 and 370.

If the BIST pattern is not looped back, then, at step 380, the BIST pattern is sent to either the downlink 145 or the transmit crosslink 195. If the BIST data is sent to the downlink 145, then the BIST pattern passes through the downlink 145 to the receive ground terminal 120 at step 385. Finally, at step 390, the BIST pattern is received at the ground terminal and a final BIST comparison occurs.

If the BIST pattern is sent to the transmit crosslink 195, then the BIST pattern passes through the transmit crosslink 195 and is transmitted at step 395. The transmitted BIST pattern may be received by the receive crosslink 185 of another satellite such the second satellite 440 in the satellite communications system 400 of Figure 4. As detailed above, the second satellite 440 is generally similar to the first satellite 430. Once the BIST pattern is received by the receive crosslink 185 of the second satellite 440, the BIST comparisons of steps 330-370 may take place in the second satellite. For example, once the BIST pattern is received by the receive crosslink 185 of the second satellite 440, the BIST pattern passes to the input crossbar switch 138 of the second satellite 440 where another BIST comparison may occur at step 330.

Note that not all steps of the flowchart 300 need take place for the payload level BIST to occur. For example, eliminating the BIST comparisons at the input crossbar switch step 330, data switch step 340, at the processing module step 350, through the processing module step 360, and output switch step 370 still provides a payload level BIST pattern comparison at the receive ground terminal at step 390. Alternatively, eliminating all steps after the BIST comparison at the input crossbar switch at step 330 also still provides a payload-level BIST. In the same way, a single BIST pattern comparison may be sufficient to provide the desired BIST.

Additionally, the BIST pattern may be passed among the satellites of the satellite communication system 400 of Figure 4. For example, the BIST pattern may be passed to a second satellite where the BIST comparisons of steps 330-370 may occur. The BIST pattern may then be passed to additional satellites where further comparisons may occur. The BIST pattern may also be continuously looped back within a satellite via the loop connection 178 to verify the integrity of the input crossbar switch 138, routing processor 140, and output crossbar switch 144. Also, the BIST pattern may 1) be downlinked at the downlink of the satellite receiving the original signal from the transmit ground terminla 110, 2) be downlinked at the downlink of any other satellite in the satellite communication system 400, or 3) not be downlinked at all if the BIST pattern is continuously crosslinked between satellites or if the BIST pattern in continuously looped back via loop connection 178, or some combination thereof.

The above-described BIST may provide several advantages. The BIST offers another type of testing and may isolate whether a malfunction occurs in the payload, prior to entering the payload, in the receive terminal or in the crosslinks between satellites. Also, the BIST may operate at full system speed, providing the ability to identify rate-dependent errors. The BIST operation may be fully interleaved with normal data services, thus providing the ability to test the payload without interruption to normal data processing operation. Additionally, the BIST may be suitable for testing multibeam payloads and multi-satellite constellations. Also, the BIST allows for multiple data monitoring points allowing better resolution in isolating failure sites.

While particular elements, embodiments and applications of the present invention have been shown and described, it is understood that the invention is not limited thereto since modifications may be made by those skilled in the art, particularly in light of the foregoing teaching. It is therefore contemplated by the appended claims to cover such modifications and incorporate those features which come within the spirit and scope of the invention.

## Claims

1. A satellite system for carrying a data stream, said satellite system comprising:
a satellite having an uplink for receiving a date stream;
a Built-In Self Test (BIST) generator for inserting a BIST pattern in the data stream received by said uplink; and
a BIST comparator downstream from said uplink.

2. The satellite system of claim 1 further including an on-board computer wherein said BIST comparator in contained within said on-board computer.

3. The satellite system of claim 2 further including an input crossbar switch wherein the BIST pattern is passed from said input crossbar switch to said on-board computer for comparison.

4. The satellite system of claim 1 further including a routing processor containing a processing module wherein the BIST comparator is contained within said processing module.

5. The satellite system of claim 1 further including a receive ground terminal containing a demodulator wherein the BIST data comparator is contained within said demodulator.

6. The satellite system of claim 1 further including loop connection between two points within said satellite wherein said BIST pattern is passed between said two points by said loop connection.

7. The satellite system of claim 1 further including a data generator circuit within said uplink wherein the BIST pattern is supplied to the BIST generator by said data generator circuit.

8. The satellite system of claim 1 further including an on-board computer containing a memory for storing a BIST pattern and a relay from said on-board computer to said BIST generator for supplying said BIST pattern to said BIST generator.

9. The satellite system of claim 1 wherein said data stream is a digital stream and said BIST pattern is a digital pattern.

10. A Built-In Self Test (BIST) subsystem for testing the operation of satellite systems carrying a data stream, said BIST subsystem comprising:
a BIST pattern generator injecting a known BIST pattern into a data stream carried by a satellite system; and
a BIST pattern comparator located in said data stream downstream of said BIST pattern generator, for comparing a received BIST pattern with said known BIST pattern, to test the operation of satellite systems.

11. The BIST subsystem of claim 10 wherein said BIST pattern comparator is located in the demodulator of a receive ground terminal.

12. The BIST subsystem of claim 10 wherein said BIST pattern comparator is located in at least one of an on-board computer and a processing module of a satellite other than a satellite including said BIST pattern generator.

13. The BIST subsystem of claim 10 further including a loop connection between two points within a satellite wherein said BIST pattern is passed between said two points by said loop connection.

14. A method for performing a Built-In Self Test (BIST) of a satellite system carrying a data stream along a data path comprising the steps of:
injecting a known BIST pattern into a data stream at an upstream point along a data path; and
comparing said known BIST pattern with a received BIST pattern obtained at a point along said data path located downstream from the point at which the known BIST pattern is injected.

15. The method of claim 14 wherein said comparing step additionally comprises the step of comaring said known BIST pattern with said received BIST pattern at an on-board computer.

16. The method of claim 14 wherein said comparing step additionally comprises the step of comparing said known BIST pattern with said received BIST pattern at a processing module within a routing processor.

17. The method of claim 14 wherein said comparing step additionally comprises the step of looping said BIST pattern from a starting downstream point along the data path to an ending upstream point along the data path, said ending upstream point remaining downstream from said injecting upstream point.
